# EUROPÄISCHE PATENTSCHRIFT

(11) **EP 1 247 661 B1**
(45) Veröffentlichungstag und Bekanntmachung des Hinweises auf die Patenterteilung: **28.11.2007**
(21) Anmeldenummer: 02005541.4
(22) Anmeldetag: 11.03.2002
(51) Int. Cl.: B60C 25/132

(54) **Vorrichtung und Verfahren zum Aufziehen von Kraftfahrzeugreifen auf Felgen von Scheibenrädern**
Apparatus and method for mounting vehicle tyres on rims of disc wheels
Appareil et méthode pour le montage de pneumatiques de véhicules sur des jantes de roues pleines

(30) Priorität: 03.04.2001 DE 10116469
(43) Veröffentlichungstag der Anmeldung: 09.10.2002
(73) Patentinhaber: Hofmann Maschinen- und Anlagenbau GmbH, 67550 Worms (DE)
(72) Erfinder: Kupka, Heinz, 69502 Hembach (DE)
(74) Vertreter: Nöth, Heinz

(56) Entgegenhaltungen:
- DE-A- 4 028 080

## Beschreibung

Die Erfindung betrifft eine Vorrichtung und ein Verfahren zum Aufziehen von Kraftfahrzeugreifen auf Felgen von Scheibenrädern mit den Merkmalen des Oberbegriffs der Patentansprüche 1 bzw. 14.

Bei einer derartigen automatischen Reifenmontage- und Füllanlage ist das Montagewerkzeug beispielsweise in Form von zwei Reifenaufziehrollen und einer Reifenführungsrolle an einem einarmigen Aufziehkopf gelagert. Der Radial- und Axialabstand des Aufziehkopfes kann in Abhängigkeit vom Typ des Kraffahrzeugrades verstellt werden und ist in eine Arbeitsposition absenkbar ausgeführt. Das Aufziehwerkzeug kann dabei aus zwei Reifenaufziehrollen und einer Reifenführungsrolle bestehen. Mit Hilfe eines Elektromotors wird das Reifenaufziehwerkzeug am einarmigen Aufziehkopf um eine Achse gedreht (360° Drehbewegung), wodurch ein scheibenradfernes Aufziehen ermöglicht wird.

Mit Hilfe einer elektronischen Drehmomentaufnahme erzielt man eine Kontrolle des Aufziehvorgangs und eine Anzeige an einem Zeigerinstrument. Durch Lampenanzeige läßt sich ein Überschreiten eines voreingestellten maximal zulässigen Drehmoments anzeigen, so daß eine weitere Kontrolle nach einem derartigen Aufziehvorgang am montierten Reifen veranlaßt werden kann.

Ferner ist aus der DE 28 29 935 A1 eine Vorrichtung zum Aufziehen von Kraftfahrzeugreifen auf Felgen von Scheibenrädern bekannt, bei dem um eine Achse drehbar und mit einem Abstand von der Achse gelagerte Reifenaufziehwerkzeuge vorgesehen sind, die mittels eines Antriebs um die jeweilige Scheibenradachse während des Aufziehvorganges angetrieben und gedreht werden.

In der DE 40 28 080 C2 sind eine Vorrichtung und ein Verfahren der eingangs genannten Art offenbart, wobei eine Stromversorgungseinrichtung an eine Drehmomentbegrenzungseinrichtung angeschlossen ist, die bei Überschreiten eines vorgegebenen vom Antriebsmotor auf das Reifenaufziehwerkzeug übertragenen Drehmoments (Drehmomentschwellenwert) bewirkt, daß ein Bremsstrom zum Anhalten des Drehantriebs dem Antriebsmotor zugeführt wird. Somit wird eine gewünschte Drehmomentbegrenzung und damit eine zu erzielenden schonende Behandlung des Reifens während des Aufziehvorgangs durch eine drehmomentüberwachte Stromversorgung des Antriebs erreicht. Bei Überschreiten eines vorgewählten Antriebsmomentes als Grenzwert bremst der Antrieb, um den Reifen nicht zu zerstören.

Bei der vorgenannten Grenzwertmethode wird der wirkliche Abschaltmoment durch die schwer beherrschbare Bremszeit bestimmt, die damit wesentlich über die Schädigung des Reifens entscheidet. Dies führt zur Problematik, daß der Reifen selbst bei abgebrochenem Aufziehvorgang aufgrund der Bremszeit noch beschädigt werden kann.

Es ist daher Aufgabe der vorliegenden Erfindung, eine Vorrichtung und ein Verfahren der eingangs genannten Art zu schaffen, durch die eine schonendere Behandlung des Reifens sichergestellt werden kann.

Diese Aufgabe wird gelöst durch die im Patentanspruch 1 bzw. 14 angegebenen Maßnahmen.

Bei der Erfindung wird der Gradient des Momentenverlaufs als Abschaltkriterium herangezogen, so daß ein Abschalten bereits deutlich vor Erreichen des Grenzwerts des Momentes oder des Motorstroms erreichbar ist. Dadurch wird der Reifen schonender behandelt und sichergestellt, daß der Reifen durch den abgebrochenen Aufziehvorgang noch keinen Schaden genommen hat. Die Problematik der schwer beherrschbaren Bremszeit bei der Grenzwertmethode kann dadurch vermieden werden.

Die Stromversorgungseinrichtung kann vorzugsweise eine Stromführungseinrichtung und eine Drehmomentregeleinrichtung aufweisen, über welche dem Antriebsmotor der Versorgungsstrom zugeführt ist, und die Gradientenbegrenzungseinrichtung kann mit der Drehmomentregeleinrichtung in der Weise verbunden sein, daß beim Überschreiten des vorgegebenen Gradientens die für das Solldrehmoment der Drehmomentregeleinrichtung zugeführte Regelgröße auf Null gesetzt ist. Dadurch ist eine einfache Abschaltung über das Solldrehmoment möglich.

Zur Verbesserung des Anfangs- und Bremsmoments kann die Vorrichtung so ausgestaltet sein, daß beim Hochlauf des Antriebsmotors über eine in der Stromführungseinrichtung geschlossene Schalteinrichtung ein zusätzlicher elektrischer Führungsstrom der Regeleinrichtung zugeleitet ist, wobei der Regeleinrichtung als Regelgröße ein der Solldrehzahl des Antriebsmotors entsprechendes Signal zugeleitet ist; daß beim Erreichen der Solldrehzahl bzw. bei Solldrehzahl die Schalteinrichtung in der die Führungsgröße die von den Stromführungseinrichtung geöffnet ist; und daß beim Abbremsen das als Regelgröße der Drehmomentregeleinrichtung zugeleitete, der Solldrehzahl proportionale Signal auf Null gesetzt ist und durch Schließen der Schalteinrichtung in der Stromversorgungseinrichtung der Regeleinrichtung der zusätzliche Führungsstrom zugeleitet ist. Somit wird beim Anlaufen und beim Abbremsen des Antriebs ein erhöhter Führungsstrom zugeführt.

Die Gradientenbegrenzungseinrichtung kann eine Berechnungseinrichtung aufweisen zum Ermitteln des Gradienten des Momentenverlaufs anhand einer Differenzenquotientenbildung. Dabei kann ein Drehwinkelgeber zum Erfassen des Drehwinkels des Aufziehwerkzeugs um die Achse vorgesehen sein, wobei der Differenzenquotient bezüglich des erfaßten Drehwinkels gebildet ist.

Als alternatives Ausführungsbeispiel kann die Berechnungseinrichtung ausgestaltet sein zum Bilden des Differenzenquotienten bezüglich der Zeit. Der Differenzenquotient kann anhand von in einem Datenspeicher gespeicherten Momenten- und Drehwinkelwerten bzw. Zeitwerten erfolgen. Als Momentenwert kann das Ausgangssignal einer Drehzahlmeßeinrichtung oder der dem Antriebsmotor zugeführte Strom verwendet werden.

Zur Verbesserung der Zuverlässigkeit kann in der Gradientenbegrenzungseinrichtung als Abschaltkriterium ein Überschreiten des vorgegebenen Gradienten für einen vorbestimmten Prozentsatz der in dem Datenspeicher gespeicherten diskretisierten Werte herangezogen werden. Dadurch kann ein Abschalten bei unkritischen kurzzeitigen Gradientenanstiegen vermieden werden.

Vorzugsweise ist die Gradientenbegrenzungseinrichtung ausgestaltet zum Ermitteln des Gradienten in vorbestimmten Beobachtungsintervallen. Durch diese Maßnahme kann ein Abschalten bei für den Reifen unschädlichen Gradientenanstiegen, die beispielsweise beim Starten des Aufziehwerkzeugs oder beim erstmaligen Berühren des Reifens auftreten, vermieden werden. Die Beobachtungsintervalle können radspezifisch wählbar sein.

Durch die Erfindung wird mithin eine Schutzeinrichtung geschaffen, durch die eine schonendere Behandlung des Reifens beim Aufziehvorgang und damit eine Zerstörung aufgrund der Bremszeit verhindert wird.

Die Erfindung wird im folgenden anhand von Ausführungsbeispielen unter Bezugnahme auf die Zeichnungsfiguren näher erläutert. Es zeigen:
- Fig. 1: ein Ausführungsbeispiel für einen Aufziehkopf, welcher bei der Erfindung zur Anwendung kommen kann;
- Fig. 2: ein Blockschaltbild für Ausführungsbeispiele der bei der Erfindung zur Anwendung kommenden Drehmomentbegrenzungseinrichtung und Stromversorgungseinrichtung,
- Fig. 3a, 3b: einen Momentenverlauf mit angedeutetem Differentialquotienten und einen Stromverlauf mit angedeutetem Differenzenquotienten,
- Fig. 4: einen Stromverlauf für den Startvorgang des Aufziehwerkzeugs,
- Fig. 5: einen Stromverlauf mit einer diskretisierten Datenfolge, und
- Fig. 6: einen gemessenen Verlauf des Drehmoments gemäß einem Praxisbeispiel.

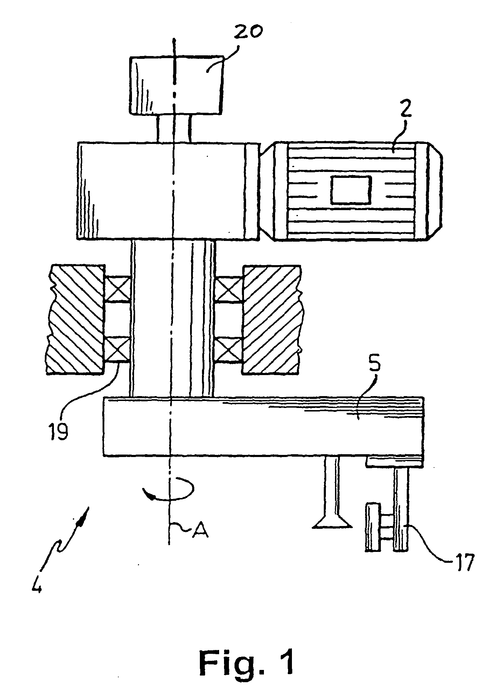

In Fig. 1 ist ein Ausführungsbeispiel eines Aufziehkopfes 4 schematisch dargestellt, der bei der Erfindung zur Anwendung kommen kann. Dieser Aufziehkopf 4 besteht im wesentlichen aus einem in einem Lager 19 um eine Achse A drehbar gelagerten Aufziehwerkzeug 17. Das Aufziehwerkzeug 17 besitzt einen Abstand zur Achse A, wobei dieser Abstand in Abhängigkeit vom Reifen und/oder Felgendurchmesser des Scheibenrades auf welches der Reifen aufgezogen werden soll, eingestellt werden kann. Hierzu ist das Aufziehwerkzeug 17 an einem sich senkrecht zur Achse A erstreckenden Aufzieharm 5 gelagert. Der für den Aufziehvorgang erforderliche Drehantrieb für das Aufziehwerkzeug 17 wird von einem Antriebsmotor 2, insbesondere Elektromotor, geliefert. Bevorzugt handelt es sich hier um einen Servomotor, beispielsweise Drehstromservomotor. Es kann jedoch auch ein Gleichstromservomotor zum Einsatz kommen. Dieser Aufziehkopf kann in bekannter Weise in einer Montagestation einer automatischen Reifenmontageanlage, wie sie für automatische Reifenmontage- und Füllanlagen bekannt ist, zum Einsatz kommen.

Gemäß einem ersten Ausführungsbeispiel kann der Aufziehkopf 4 mit einem Winkelinkrementalgeber 20 ausgestattet sein, der den momentanen Drehwinkel des Aufziehwerkzeugs 17 um die Achse A als diskreten Meßwert erfaßt. Der Winkelinkrementalgeber kann als Widerstandswinkelfühler, induktiver Winkelfühler, Drehmelder, magnetischer Winkelfühler, Winkelfühler mit Hallsonden und Feldplatten oder dergleichen ausgebildet sein. Die Diskretisierung kann direkt im Winkelfühler oder durch anschließende Quantisierung erreicht werden. Durch das Ausgangssignal des Winkelinkrementalgebers 20 stehen diskrete Winkelmeßwerte zur Verfügung, die zur Ermittlung des Gradienten des Momentenverlaufs beispielsweise durch Bildung eines Differenzenquotienten auf Grundlage eines erfaßten, dem Drehmoment entsprechenden Meßsignals herangezogen werden können.

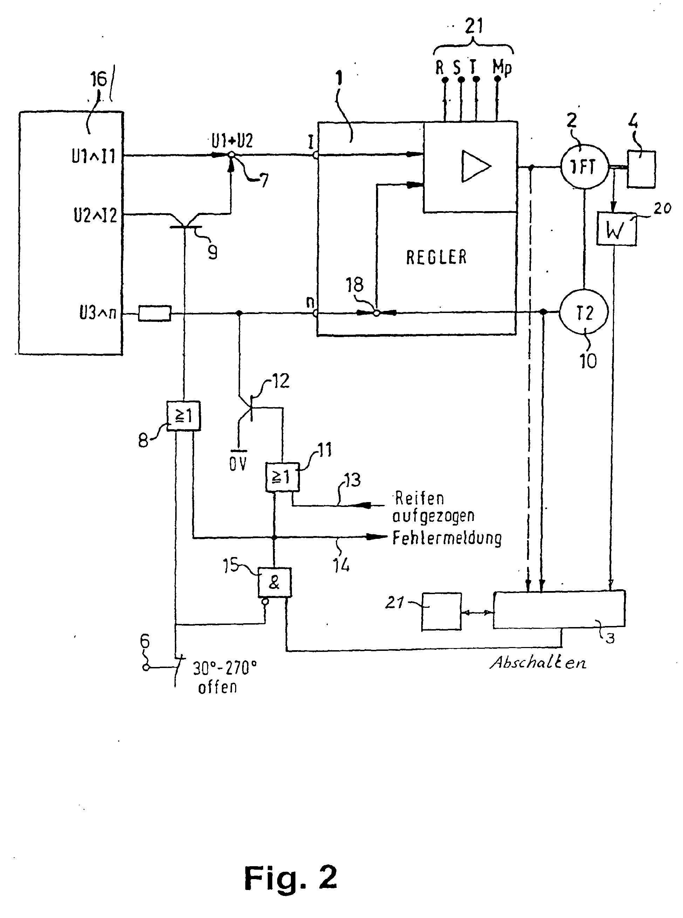

Fig. 2 zeigt ein Blockschaltbild mit einer Stromversorgungseinrichtung und einer Gradientenbegrenzungseinrichtung, die mit dem Antriebsmotor 2 verbunden sind. Gemäß Fig. 2 enthält die Stromversorgungseinrichtung für den Antriebsmotor 2 als wesentliche Bestandteile einen mit einer dreiphasigen Versorgungsquelle 21 verbundenen Regler, der als Drehmomentregeleinrichtung 1 wirkt und einen Führungsgrößengeber 16 zur Lieferung programmierter Ausgangsspannungen U1 und U2 für die Drehmomentregelung sowie eine Ausgangsspannung U3, die als Regelgröße der Drehmomentregeleinrichtung 1 zugeführt wird. Ferner enthält die Stromversorgungseinrichtung eine bevorzugt als Transistor ausgebildete Schalteinrichtung 9 und eine Summenschaltung 7 in welcher an den Ausgängen U1 und U2 des Führungsgrößengebers oder Signalgenerators 16 gelieferte Führungsströme I1 und I2, welche als Führungsgröße dem Eingang I der Drehmomentregeleinrichtung 1 zugeführt sind, beim Hochlauf und Abbremsen des Motors, wie noch erläutert wird, summiert werden. Die Summenschaltung 7, die Schalteinrichtung 9 und der Signalgenerator 16 (Führungsgrößengeber) bilden eine Stromführungseinrichtung. In der Drehmomentregeleinrichtung 1 ist ferner noch in bekannter Weise ein Vergleicher 18 vorgesehen, dem die Regelgröße und ein Istwert, wie noch erläutert wird, zugeführt werden.

Am Ausgang der Drehmomentregeleinrichtung 1 ist der Antriebsmotor 2 angeschlossen, der, wie anhand der Fig. 1 erläutert wurde, für den Aufziehkopf 4 beim Aufziehvorgang eines Reifens auf die Felge eines Scheibenrads das erforderliche Drehmoment liefert.

Die Gradientenbegrenzungseinrichtung enthält eine Berechnungseinrichtung 3, beispielsweise einen Mikroprozessor, Mikrocomputer oder dergleichen und einen Datenspeicher 21 zum Speichern diskreter Meßwerte. Der Berechnungseinrichtung 3 werden die durch den Winkelinkrementalgeber 20 ermittelten diskreten Drehwinkelwerte zugeführt. Ferner werden der Berechnungseinrichtung 3 ein Ausgangssignal eines Tachogenerators, welcher eine an den Antriebsmotor 2 angeschlossene Drehzahlmeßeinrichtung 10 bildet, zugeführt. Die Diskretisierung der zugeführten Meßwerte kann auch anhand eines Analog/Digital-Wandlers in der Berechungseinrichtung 3 durchgeführt werden. Die ermittelten diskreten Meßwerte können direkt verarbeitet oder durch die Berechnungseinrichtung 3 in dem Datenspeicher 21 zwischengespeichert und zur Differenzenquotientenbildung verwendet. Wird ein den Gradientenverlauf betreffendes Abschaltkriterium erfüllt, so gibt die Berechnungseinrichtung 3 ein entsprechendes Abschaltsignal an eine ODER-Schaltung 11 über eine UND-Schaltung 15 ab. Der Ausgang der ODER-Schaltung 11 steuert die Basis eines Transistors 12 an, der eine Schalteinrichtung, die auf die Führungsgröße am Ausgang U3 des Signalgebers 16 einwirkt, wie noch erläutert wird.

Der zweite Eingang der UND-Schaltung 15 ist mit einem Schalter 6 verbunden. Der Ausgang der UND-Schaltung 15 sowie ein Kontakt des Schalters 6 sind mit den beiden Eingängen einer weiteren ODER-Schaltung 8 verbunden. Der Ausgang dieser ODER-Schaltung 8 ist mit der Basis des Transistors verbunden, der die Schalteinrichtung 9 in der Stromführungseinrichtung bildet.

Die Wirkungsweise der in Fig. 2 dargestellten Schaltungsanordnung in Verbindung mit dem Antriebsmotor 2 ist folgende:

Nachdem der in Fig. 1 dargestellte Aufziehkopf 4 auf den zu montierenden Reifen aufgesetzt worden ist, werden von dem Führungsgrößengeber 16 die an den Ausgängen U1, U2 und U3 zu liefernden Spannungen bereitgestellt. Ferner wird der Schalter 6 betätigt, so daß die als Transistor ausgebildete Schalteinrichtung 9 eingeschaltet wird. Hierdurch werden sowohl vom Ausgang U1 als auch vom Ausgang U2 Führungsströme I1 und I2 geliefert, die in der Summenschaltung 7 zu einem erhöhten Führungsstrom summiert werden. Dieser erhöhte Führungsstrom wird über den Eingang I der Drehmomentenregeleinrichtung 1 für den Hochlauf des Antriebsmotors 2 zugeführt. Der Antriebsmotor 2 läuft auf eine Solldrehzahl hoch, welche durch das am Ausgang U3 des Führungsgrößengebers 16 gelieferte Signal als Regelgröße dem Eingang n der Drehmomentregeleinrichtung 1 zugeleitet wird. Mit dem Antriebsmotor 2 ist die Drehzahlmeßeinrichtung 2 verbunden, die an ihrem Ausgang ein der Istdrehzahl proportionales elektrisches Signal liefert. Dieses Signal wird als Istwert dem Vergleicher 18 in der Drehmoment- bzw. Drehzahlregeleinrichtung 1 zugeführt. Auf diese Weise wird die erforderliche kontinuierliche Regelfunktion ausgeführt, und der Motor läuft mit der gewünschten Solldrehzahl um.

Nachdem der Aufziehkopf 4 innerhalb eines bestimmten Winkelbereichs, beispielsweise von ungefähr 20 bis 30° am Anfang des Aufziehvorgangs verschwenkt worden ist, wird der Schalter 6 geöffnet. Hierdurch wird die Schalteinrichtung 9 abgeschaltet, so daß der Antriebsmotor 2 nur noch in Abhängigkeit des verringerten Führungsstroms I1 über die Regeleinrichtung 1 von der Versorgungsquelle 21 versorgt wird.

Hierdurch wird gleichzeitig die als Sicherheitseinrichtung wirkendende Gradientenbegrenzungseinrichtung in Funktion gesetzt. Wie Fig. 2 zeigt, wird das drehzahlproportionale Ausgangssignal der Drehzahlmeßeinrichtung 10 und der Ausgang des Winkelinkrementalgebers 20 den Eingängen der Berechnungseinrichtung 3 zugeführt. Die Berechnungseinrichtung 3 wurde auf einen vorbestimmten, das Abschaltkriterium bestimmenden Gradientenschwellwert programmiert. Während des Aufziehvorgangs kann die Berechnungseinrichtung 3 kontinuierlich die erfaßten diskretisierten Momentanwerte des drehzahlproportionalen Ausgangssignals der Drehzahlmeßeinrichtung 10 und des Winkelsignals des Winkelinkrementalgebers 20 in dem Datenspeicher 21 speichern und berechnet fortlaufend den momentanen Differenzenquotienten ΔM/Δ*ϕ*. Als Alternative kann anstelle der Verwendung des Winkelinkrementalgebers 20 auch der Differenzenquotient gegenüber der Zeit ermittelt werden, wobei die diskreten Momentenwerte in Bezug auf die zugehörigen Zeitwerte in dem Datenspeicher 21 gespeichert werden.

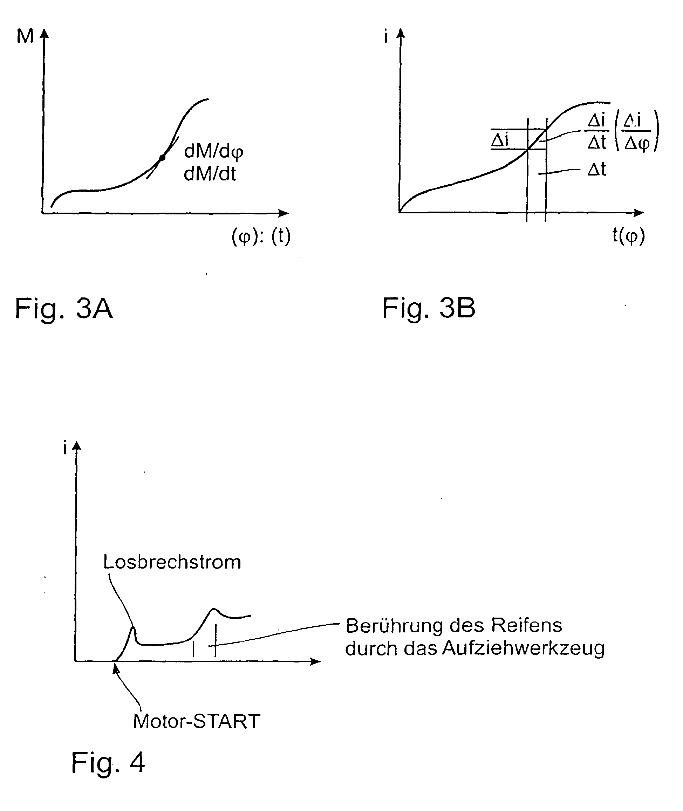

Fig. 3A zeigt ein Diagramm mit einem anhand des Ausgangssignals der Drehzahlmeßeinrichtung 10 ermittelten Momentenverlauf über dem Drehwinkel bzw. der Zeit. In dem Diagramm entspricht die Steigung einer Tangente in einem Punkt P dem Differentialquotienten dM/d*ϕ* bzw. dM/dt an. Dieser Differentialquotient entspricht in der Theorie dem Gradienten des Drehmoments für die Winkel- bzw. Zeitkoordinate des Punktes P. Bei der technischen Realisierung in der erfindungsgemäßen Vorrichtung wird der Gradient durch eine Differenzenquotientenbildung ΔM/Δ*ϕ* bzw. ΔM/Δt genähert, da die Momentenverläufe diskretisiert vorliegen und der Drehwinkel mittels des Drehwinkelinkrementalgebers 20 ebenfalls diskret gemessen wird. Das Gleiche gilt auch für die alternative Messung der Zeit t.

Als alternatives Ausführungsbeispiel kann der Momentenverlauf auch anhand des dem Antriebsmotor 2 zugeführten Stroms ermittelt werden, wie in Fig. 2 durch die gestrichelte Meßzuführleitung zu der Berechnungseinrichtung 3 angedeutet ist. Die Strommessung kann durch ein Widerstandsnetzwerk, eine Amperemeter oder dergleichen realisiert werden, wobei das Meßsignal der Berechnungseinrichtung 3 diskretisiert zugeführt oder die Diskretisierung in der Berechnungseinrichtung 3 erfolgen kann. Die diskretisierten Strommeßwerte können dann alternativ zu den Drehzahlmeßwerten in den Datenspeicher 21 gespeichert werden.

Fig. 3B zeigt einen Stromverlauf über der Zeit t und eine beispielhaft Differenzenquotientenbildung Δi/Δt, wie sie beispielsweise für diskrete Meßwerte in der Berechnungseinrichtung 3 erfolgt.

Wird während des Aufziehvorgangs zwischen dem Aufziehwerkzeug 17 und der Ausgangswelle des Antriebsmotors 2 ein überhöhter Gradient des Drehmomentenverlaufs aufgrund des sich ändernden Ausganssignals der Drehzahlmeßeinrichtung 10 oder der Strommeßeinrichtung durch die Differenzenquotientenbildung in der Berechnungseinrichtung 3 festgestellt, so liefert die Berechnungseinrichtung 3 ein Abschaltsignal, das über die UND-Schaltung 15 und die ODER-Schaltung 11 die Basis des Transistors 12 ansteuert, wodurch der mit Masse verbundene Transistor leitend wird und damit die vom Transistor 12 gebildete Schalteinrichtung eingeschaltet wird. Hierdurch wird die Regelgröße, welche dem Eingang n der Regeleinrichtung 1 zugeleitet wird, auf Null gesteuert.

Gleichzeitig steuert das Abschaltsignal der Berechnungseinrichtung 3 über die UND-Schaltung 5 und die ODER-Schaltung 8 die Basis des Transistors, welcher die Schalteinrichtung 9 in der Stromversorgungseinrichtung bildet, an. Hierdurch wird die Schalteinrichtung 9 eingeschaltet und ein zusätzlicher Führungsstrom I2 der Summenschaltung 7 zugeführt, wie das bereits beim Hochlauf des Antriebsmotors 2 der Fall war. Da die Regelgröße, welche dem Eingang der Regeleinrichtung 1 zugeleitet ist, auf Null gesteuert ist, wie oben schon erläutert wurde, bewirkt der erhöhte Führungsstrom I1 + I2 einen erhöhten Bremsstrom, so daß der Antriebsmotor 2 stark abgebremst und mit geringem Nachlauf zum Stehen gebracht werden kann. Auf diese Weise wird eine vom Gradienten des Drehmoments abhängige Begrenzung und damit eine Schonung des Reifens beim Aufziehvorgang erreicht.

Wie ferner aus Fig. 2 zu entnehmen ist, kann über eine Leitung 14 eine Fehlermeldung in Form eines Alarms oder eines Leuchtsignals abgegeben werden, wenn die Berechnungseinrichtung 3 das Abschaltsignal abgibt.

Bei normalem Ablauf des Reifenaufziehvorgangs wird der Schalter 6 nach dem Erreichen des für den Aufziehvorgang erforderlichen Drehwinkels, beispielsweise 270° geschlossen und ferner wird über eine Steuerleitung 13 ein Signal "Reifen aufgezogen" an den Eingang der ODER-Schaltung 11 geliefert. Dadurch wird der die Schalteinrichtung 12 bildende Transistor in den leitfähigen Zustand gesteuert. Hierdurch wird, wie schon erläutert, die im Eingang n der Regeleinrichtung 1 geführte Regelgröße auf Null gebracht.

Da ferner über die ODER-Schaltung 8 durch den geschlossenen Schalter 6 die durch den Transistor gebildete Schalteinrichtung 9 in der Stromversorgungseinrichtung eingeschaltet ist, wird der zusätzliche Versorgungsstrom I2 dem Führungsstrom I1 hinzuaddiert, so daß zum Abbremsen des Antriebsmotors 2 ein erhöhter Bremsstrom geliefert wird. Auf diese Weise wird bei einem normalen Aufziehvorgang der Antriebsmotor 2 angehalten.

In der Praxis zeigt sich bei der erfindungsgemäßen Vorrichtung, daß der kritische Grenzwert für den Gradienten des Momentenverlaufs bereits überschritten sein kann, ohne daß eine für den Reifen schädliche Situation vorliegt. Dies ist beispielsweise in dem in Fig. 4 gezeigten Momentenverlauf für den Start des Aufziehvorgangs erkennbar. Wird der erfaßte Motorstrom zur Ermittlung des Grandienten verwendet, so kann der beim Start des Antriebsmotors 2 auftretende "Losbrechstrom" zu einer Überschreitung des Grenzwertes für den Grandienten führen. Eine ähnliche Problematik ergibt sich zu dem Zeitpunkt, wenn das Aufziehwerkzeug 14 bei der Drehung erstmals den Reifen berührt. Damit in diesen Fällen keine Abschaltung aufgrund einer Fehlinterpretation erfolgt, wird die Auswertung bzw. Ermittlung des Differenzenquotienten in der Berechnungsseinrichtung 3 nur in bestimmten geeigneten Beobachtungsintervallen vorgenommen. Diese Beobachtungsintervalle können radspezifisch gewählt bzw. programmiert werden. Je nach Ausführungsbeispiel können die Beobachtungsintervalle in Abhängigkeit des erfaßten Drehwinkels oder des Zeitverlaufs des Aufziehvorgangs bestimmt werden.

Eine weitere Problematik ergibt sich dadurch, daß kurzzeitige Gradientenanstiege auch in den geeigneten Beobachtungsintervallen auftreten können und damit nicht durch die vorgenannte Intervallselektionsmethode vermeidbar sind. Eine sich daraus ergebende Fehlinterpretation und Fehlabschaltung kann dadurch vermieden werden, daß eine zeitliche Folge von Meßwerten in dem Datenspeicher 21 eingelesen und anschließend bewertet werden. Dabei wird festgestellt, für wieviele dieser Daten der bewerteten Folge der zulässige Gradient bzw. Diffenrenzenquotient überschritten wurde. So kann beispielsweise das Überschreiten des Grenzwertes für 10 % der Daten noch zulässig sein, wogegen ein Überschreiten von mehr als beispielsweise 20% der Daten ein Abschaltkriterium darstellt.

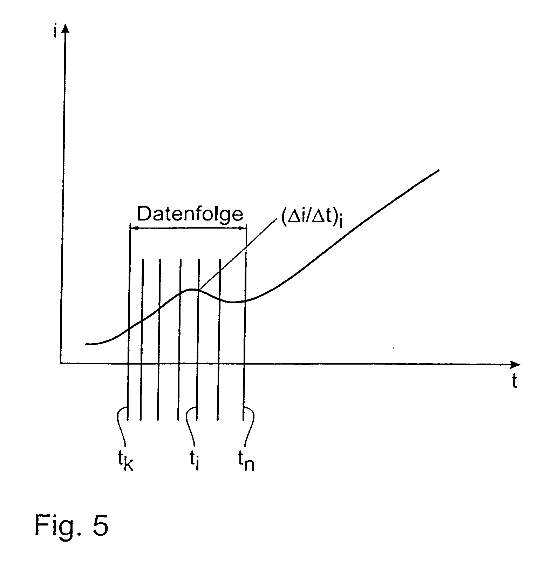

Fig. 5 zeigt einen zeitabhängigen Stromverlauf mit einer Datenfolge die den diskreten erfaßten Stromwerten für Zeitpunkte tₖ bis tₙ entsprechen, wobei der Differenzenquotient (Δi/Δt)ᵢ zum Zeitpunkt tᵢ angedeutet ist. Für jeden dieser Zeitpunkte tₖ bis tₙ der Datenfolge wird der Differenzenquotient gebildet und der prozentuale Anteil der Überschreitungen ermittelt. Durch diese Maßnahme kann eine Fehlabschaltung bei unkritischen kurzzeitigen Gradientenanstiegen vermieden werden.

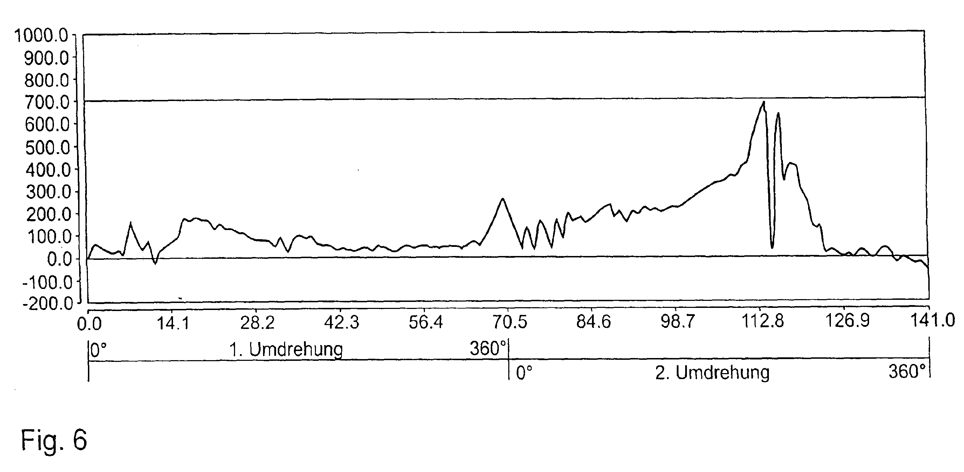

Fig. 6 zeigt ein durch eine konkrete Messung erhaltenes Meßprotokoll des Momentenverlaufs beim Aufziehen eines Kraftfahrzeugreifens. Im einzelnen handelt es sich um die Darstellung von zwei Umdrehungen des Aufziehwerkzeugs 17, wobei die erste Umdrehung mit den kleineren Momentenwerten dem Aufziehen des unteren Reifenwulstes und die zweite Umdrehung mit den kritischen Momentenverläufen dem Aufziehen des oberen Reifenwulstes entspricht. In der Darstellung ist erkennbar, daß erst eine bestimmte Dauer des Vorliegens eines kritischen Gradienten als Abschaltkriterium gewertet werden sollte.

Als Antriebsmotor 2 sollte vorzugsweise ein trägheitsarmer Elektromotor zum Einsatz kommen, so daß ein Drehmomentanstieg beim Aufziehvorgang sich sofort als Drehzahlabfall äußert, welcher von der Drehzahlmeßeinrichtung 10 erfaßt wird, falls diese zur Ermittlung des Momentenverlaufs herangezogen wird. In bevorzugter Weise kommen Servomotoren zum Einsatz, wobei diese als Drehstromservomotoren, z.B. Synchron- oder Asynchronmaschinen, oder als Gleichstromservomotoren ausgebildet sein können.

Wird der dem Antriebsmotor zugeführte Strom zur Ermittlung des Momentenverlaufs herangezogen, so ist der Einsatz von Gleichstromservomotoren bevorzugt, da dann der bei einer Belastung des Antriebsmotors 2 erhöhte Ankerstrom in Form eines Spannungsabfalls im Ankerkreis abgetastet und in der Berechnungseinrichtung 3 ausgewertet werden kann.

## Patentansprüche

1. Vorrichtung zum Aufziehen von Kraftfahrzeugreifen auf Felgen von Scheibenrädern mit einem um eine Achse drehbaren und mit einem Abstand von der Achse gelagerten Reifenaufziehwerkzeug, einem Elektromotor als Antriebsmotor für einen Drehantrieb des Reifenaufziehwerkzeugs um die Achse und einer Stromversorgungseinrichtung für den Antriebsmotor,
**dadurch gekennzeichnet, daß**
die Stromversorgungseinrichtung (1, 7, 9, 16) an eine Gradientenbegrenzungseinrichtung (3, 8, 11-15, 20, 21) angeschlossen ist, die bei Überschreiten eines vorgegebenen Gradienten vom Antriebsmotor (2) auf das Reifenaufziehwerkzeug (17) übertragenen Drehmoments bewirkt, daß ein Bremsstrom zum Anhalten des Drehantriebs dem Antriebsmotor (2) zugeführt wird.

2. Vorrichtung nach Anspruch 1,
**dadurch gekennzeichnet, daß** die Stromversorgungseinrichtung (1, 7, 9 16) eine Stromführungseinrichtung (7, 9, 10) und eine Drehmomentregeleinrichtung (1) aufweist, über welche dem Antriebsmotor (2) der Versorgungsstrom zugeführt ist, und die Gradientenbegrenzungsseinrichtung (3, 8, 11-15, 20, 21) mit der Drehmomentregeleinrichtung (1) in der Weise verbunden ist, daß beim Überschreiten des vorgegebenen Gradienten die für das Solldrehmoment der Drehmomentregeleinrichtung (1) zugeführte Regelgröße auf Null gesetzt ist.

3. Vorrichtung nach Anspruch 1 oder 2,
**dadurch gekennzeichnet, daß**
beim Hochlauf des Antriebsmotors (2) über eine in der Stromführungseinrichtung geschlossene Schalteinrichtung (9) ein zusätzlicher elektrischer Führungsstrom (12) der Regeleinrichtung (1) zugeführt ist, wobei der Regeleinrichtung (1) als Regelgröße ein der Solldrehzahl des Antriebsmotors (2) entsprechendes Signal (U3) zugeleitet ist;
bei Erreichen der Solldrehzahl bzw. bei Solldrehzahl die Schalteinrichtung (9) in der die Führungsgröße liefernden Stromführungseinrichtung (7, 9, 16) geöffnet ist; und
beim Abbremsen das als Regelgröße der Drehmomentregeleinrichtung (1) zugeleitete, der Solldrehzahl proportionale Signal auf Null gesetzt ist und durch Schließen der Schalteinrichtung (9) in der Stromversorgungseinrichtung (1, 7, 9, 16) der Regeleinrichtung (1) der zusätzliche Führungsstrom (I2) zugeleitet ist.

4. Vorrichtung nach einem der Ansprüche 1 bis 3,
**dadurch gekennzeichnet, daß** die Gradientenbegrenzungseinrichtung (3, 8, 11-15, 20, 21) eine Berechnungseinrichtung (3) aufweist zum Ermitteln des Gradienten des Momentenverlaufs anhand einer Differenzenquotientenbildung.

5. Vorrichtung nach Anspruch 4,
**gekennzeichnet durch** einen Drehwinkelgeber (20) zum Erfassen des Drehwinkels des Aufziehwerkzeugs (17) um die Achse (A), wobei der Differenzenquotient bezüglich des erfaßten Drehwinkels gebildet ist.

6. Vorrichtung nach Anspruch 4 oder 5,
**dadurch gekennzeichnet, daß** die Berechnungseinrichtung (3) ausgestaltet ist zum Speichern von diskretisierten Momenten- und Drehwinkelwerten in einem Datenspeicher (21), wobei die Bildung des Differenzenquotienten anhand der gespeicherten Momente- und Drehwinkelwerte erfolgt.

7. Vorrichtung nach Anspruch 4,
**dadurch gekennzeichnet, daß** die Berechnungseinrichtung (3) ausgestaltet ist zum Bilden des Differenzenquotienten bezüglich der Zeit.

8. Vorrichtung nach Anspruch 4 oder 7,
**dadurch gekennzeichnet, daß** die Berechnungseinrichtung (3) ausgestaltet ist zum Speichern von diskretisierten Momenten- und Zeitwerten in einem Datenspeicher (21), wobei die Bildung des Differenzenquotienten anhand der gespeicherten Momenten- und Zeitwerten erfolgt.

9. Vorrichtung nach einem der Ansprüche 4 bis 8,
das Ausgangssignal einer Drehzahlmeßeinrichtung (10) als Momentenwert verwendet wird.

10. Vorrichtung nach einem der Ansprüche 4 bis 8,
**dadurch gekennzeichnet, daß** der dem Antriebsmotor (2) zugeführte Strom als Momentenwert verwendet wird.

11. Vorrichtung nach Anspruch 6 oder 8,
**dadurch gekennzeichnet, daß** in der Gradientenbegrenzungseinrichtung (3, 8, 11-15, 20, 21) als Abschaltkriterium ein Überschreiten des vorgegebenen Gradienten für einen vorbestimmten Prozentsatz der in dem Datenspeicher gespeicherten diskreten Werte herangezogen wird.

12. Vorrichtung nach Anspruch 11,
**dadurch gekennzeichnet, daß** der vorbestimmte Prozentsatz 20 % beträgt.

13. Vorrichtung nach einem der Ansprüche 1 bis 12,
**dadurch gekennzeichnet, daß** die Gradientenbegrenzungseinrichtung (3, 8, 11-15, 20, 21) ausgestaltet ist zum Ermitteln des Gradienten in vorbestimmten Beobachtungsintervallen.

14. Verfahren zum Aufziehen von Kraftfahrzeugreifen auf Felgen von Scheibenrädern mit einem um eine Achse drehbaren und mit einem Abstand von der Achse gelagerten Reifenaufziehwerkzeug, einem Elektromotor als Antriebsmotor für einen Drehantrieb des Reifenaufziehwerkzeugs um die Achse und einer Stromversorgungseinrichtung für den Antriebsmotor, **gekennzeichnet durch** die Schritte:
Ermitteln des Gradienten des vom Antriebsmotor auf das Reifenaufziehwerkzeug (17) übertragenen Drehmoments, und Zuführen eines Bremsstroms aus der Stromversorgungseinrichtung (21) zu dem Antriebsmotor (2) zum Anhalten des Drehantriebs, falls der ermittelte Gradient einen vorbestimmten Wert überschreitet.

15. Verfahren nach Anspruch 14,
**gekennzeichnet durch** den Schritt des Ermittelns des Gradienten **durch** Bilden von zumindest einem der Differenzenquotienten ΔM/Δ*ϕ*, ΔM/Δt, Δi/Δ*ϕ* und Δi/Δt wobei ΔM eine Änderung des Drehmoments, Δi eine Änderung des Stroms des Antriebsmotors (2), Δ*ϕ* eine entsprechende Änderung des Drehwinkels des Aufziehwerkzeugs (17) um die Achse (A), und Δt eine entsprechende Zeitänderung kennzeichnen.

## Claims

1. A device for fitting motor vehicle tyres on rims of disc wheels comprising a tyre fitting tool which is rotatable about an axis and which is supported at a spacing from the axis, an electric motor as a drive motor for a rotary drive of the tyre fitting tool about the axis and a power supply device for the drive motor,
**characterised in that**
the power supply device (1, 7, 9, 16) is connected to a gradient-limiting device (3, 8, 11-15, 20, 21) which, when a predetermined gradient of torque transmitted by the drive motor (2) to the tyre fitting tool (17) is exceeded, causes a braking current to be supplied to the drive motor (2) to stop the rotary drive.

2. A device according to claim 1 **characterised in that** the power supply device (1, 7, 9, 16) has a current-carrying device (7, 9, 10) and a torque regulating device (11) by way of which the supply current is fed to the drive motor (2) and the gradient-limiting device (3, 8, 11-15, 20, 21) is connected to the torque regulating device (1) in such a way that, when the predetermined gradient is exceeded, the regulating value supplied to the torque regulating device (1) for the reference torque is set to zero.

3. A device according to claim 1 or claim 2 **characterised in that**,
when the drive motor (2) is accelerated, an additional electrical control current (12) is fed to the regulating device (1) by way of a switching (9) device which is closed in the current-carrying device, wherein a signal (U3) corresponding to the reference rotary speed of the drive motor (2) is fed to the regulating device (1) as the regulating value;
upon the attainment of the reference rotary speed or at the reference rotary speed the switching device (9) in the current-carrying device (7, 9, 16) which supplies the control value is opened; and
when braking occurs the signal which is fed to the torque regulating device (1) as the regulating value and which is proportional to the reference rotary speed is set to zero and the additional control current (I2) is fed to the regulating device (1) by closure of the switching device (9) in the power supply device (1, 7, 9, 16).

4. A device according to one of claims 1 to 3 **characterised in that** the gradient-limiting device (3, 8, 11-15, 20, 21) has a computing device (3) for ascertaining the gradient of the torque configuration on the basis of differential quotient formation.

5. A device according to claim 4 **characterised by** a rotary angle sender (20) for detecting the rotary angle of the fitting tool (17) around the axis (A), wherein the differential quotient is formed with respect to the detected rotary angle.

6. A device according to claim 4 or claim 5 **characterised in that** the computing device (3) is adapted to store discretised torque and rotary angle values in a data store (21), wherein formation of the differential quotient is effected on the basis of the stored torque and rotary angle values.

7. A device according to claim 4 **characterised in that** the computing device (3) is adapted to form the differential quotient with respect to time.

8. A device according to claim 4 or claim 7 **characterised in that** the computing device (3) is adapted to store discretised torque and time values in a data store (21), wherein formation of the differential quotient is effected on the basis of the stored torque and time values.

9. A device according to one of claims 4 to 8 **characterised in that** the output signal of a rotary speed measuring device (10) is used as the torque value.

10. A device according to one of claims 4 to 8 **characterised in that** the current supplied to the drive motor (2) is used as the torque value.

11. A device according to claim 6 or claim 8 **characterised in that** the fact of exceeding a predetermined gradient for a predetermined percentage of the discrete values stored in the data store is used as a switch-off criterion in the gradient-limiting device (3, 8, 11-15, 20, 21).

12. A device according to claim 11 **characterised in that** the predetermined percentage is 20%.

13. A device according to one of claims 1 to 12 **characterised in that** the gradient-limiting device (3, 8, 11-15, 20, 21) is adapted to ascertain the gradient at predetermined observation intervals.

14. A method of fitting motor vehicle tyres on rims of disc wheels comprising a tyre fitting tool which is rotatable about an axis and which is supported at a spacing from the axis, an electric motor as a drive motor for a rotary drive for the tyre fitting tool about the axis and a power supply device for the drive motor,
**characterised by** the following steps:
ascertaining the gradient of the torque transmitted by the drive motor to the tyre fitting tool (17), and
supplying a braking current from the power supply device (21) to the drive motor (2) to stop the rotary drive if the ascertained gradient exceeds a predetermined value.

15. A method according to claim 14 **characterised by** the step of ascertaining the gradient by forming at least one of the differential quotients ΔM/Δϕ, ΔM/Δt, Δi/Δϕ and Δi/Δt, wherein ΔM denotes a change in the torque, Δi denotes a change in the current of the drive motor (2), Δϕ denotes a corresponding change in the rotary angle of the fitting tool (17) about the axis (A) and Δt denotes a corresponding change in time.

## Revendications

1. Appareil pour le montage de pneumatiques de véhicules automobiles sur des jantes de roues à voile plein, comprenant un outillage de montage de pneumatique pouvant tourner autour d'un axe et monté à distance de cet axe, un moteur électrique en guise de moteur d'entraînement pour l'entraînement en rotation de l'outil de montage de pneumatique autour dudit axe, et un dispositif d'alimentation en courant pour le moteur d'entraînement,
**caractérisé en ce que** le dispositif d'alimentation en courant (1, 7, 9, 16) est raccordé à un dispositif de limitation de gradient (3, 8, 11-15, 20, 21) qui, lors du dépassement d'un gradient prédéterminé du couple transmis par le moteur d'entraînement (2) à l'outillage de montage de pneumatique (17), produit l'amenée au moteur d'entraînement (2), d'un courant de freinage destiné à arrêter l'entraînement de rotation.

2. Appareil selon la revendication 1, **caractérisé en ce que** le dispositif d'alimentation en courant (1, 7, 9, 16) a un dispositif de débit de courant (7, 9, 10) et un dispositif de régulation de couple (1) par l'intermédiaire duquel le courant d'alimentation est amené au moteur d'entraînement (2), et le dispositif de limitation de gradient (3, 8, 11-15, 20, 21) est relié de manière telle au dispositif de régulation de couple (1) que, lors du dépassement du gradient prédéterminé, la grandeur de régulation transmise au dispositif de régulation de couple (1) pour le couple de consigne, est amenée à zéro.

3. Appareil selon la revendication 1 ou 2, **caractérisé en ce que**, lors de la montée en régime du moteur d'entraînement (2), un courant électrique (12) supplémentaire est amené au dispositif de régulation (1) par l'intermédiaire d'un dispositif de commutation (9) fermé dans le dispositif de débit de courant, un signal (U3) correspondant à la vitesse de rotation de consigne du moteur d'entraînement (2) étant transmis en tant que grandeur de régulation au dispositif de régulation (1) ;
lorsqu'on atteint la vitesse de rotation de consigne ou pour la vitesse de rotation de consigne, le dispositif de commutation (9) est ouvert dans le dispositif de débit de courant (7, 9, 16) fournissant la grandeur de référence ;
et en cas de freinage, le signal proportionnel à la vitesse de rotation de consigne, transmis en tant que grandeur de régulation au dispositif de régulation de couple (1), est amené à zéro, et, par fermeture du dispositif de commutation (9) dans le dispositif d'alimentation en courant (1, 7, 9, 16), le courant de référence (12) supplémentaire est amené au dispositif de régulation (1).

4. Appareil selon l'une des revendications 1 à 3, **caractérisé en ce que** le dispositif de limitation de gradient (3, 8, 11-15, 20, 21) comprend un dispositif de calcul (3) pour déterminer le gradient de la loi de variation du couple à l'aide de la formation d'un quotient de différences.

5. Appareil selon la revendication 4, **caractérisé par** un capteur d'angle de rotation (20) pour relever l'angle de rotation de l'outillage de montage (17) autour de l'axe (A), le quotient de différences étant formé relativement à l'angle de rotation relevé.

6. Appareil selon la revendication 4 ou 5, **caractérisé en ce que** le dispositif de calcul (3) est conçu pour mémoriser des valeurs discrétisées de couple et d'angle de rotation dans une mémoire de données (21), la formation du quotient de différences s'effectuant à l'aide des valeurs de couple et d'angle de rotation mémorisées.

7. Appareil selon la revendication 4, **caractérisé en ce que** le dispositif de calcul (3) est conçu pour former le quotient de différences relativement au temps.

8. Appareil selon la revendication 4 ou 7, **caractérisé en ce que** le dispositif de calcul (3) est conçu pour mémoriser des valeurs discrétisées de couple et de temps dans une mémoire de données (21), la formation du quotient de différences s'effectuant à l'aide des valeurs de couple et de temps mémorisées.

9. Appareil selon l'une des revendications 4 à 8, **caractérisé en ce que** le signal de sortie d'un dispositif de mesure de vitesse de rotation (10) est utilisé en tant que valeur de couple.

10. Appareil selon l'une des revendications 4 à 8, **caractérisé en ce que** le courant amené au moteur d'entraînement (2) est utilisé en guise de valeur de couple.

11. Appareil selon la revendication 6 ou 8, **caractérisé en ce que** dans le dispositif de limitation de gradient (3, 8, 11-15, 20, 21), on prend en considération en guise de critère d'arrêt ou d'interruption, un dépassement du gradient prédéterminé prescrit pour un pourcentage prédéterminé des valeurs discrètes mémorisées dans la mémoire de donnée.

12. Appareil selon la revendication 11, **caractérisé en ce que** le pourcentage prédéterminé vaut 20%.

13. Appareil selon l'une des revendications 1 à 12, **caractérisé en ce que** le dispositif de limitation de gradient (3, 8, 11-15, 20, 21) est conçu pour déterminer le gradient selon des intervalles d'observation prédéterminés.

14. Procédé pour le montage de pneumatiques de véhicules automobiles sur des jantes de roues à voile plein, dans un appareil comprenant un outillage de montage de pneumatique pouvant tourner autour d'un axe et monté à distance de cet axe, un moteur électrique en guise de moteur d'entraînement pour l'entraînement en rotation de l'outil de montage de pneumatique autour dudit axe, et un dispositif d'alimentation en courant pour le moteur d'entraînement,
**caractérisé par** les étapes :
détermination du gradient du couple transmis par le moteur d'entraînement à l'outillage de montage de pneumatique (17), et amenée d'un courant de freinage en provenance du dispositif d'alimentation en courant (21) au moteur d'entraînement (2) pour arrêter l'entraînement en rotation, dans le cas où le gradient déterminé dépasse une valeur prédéterminée.

15. Procédé selon la revendication 14,
**caractérisé par** l'étape de la détermination du gradient par formation de l'un au moins des quotients de différences ΔM/Δϕ, ΔM/Δt, Δi/Δϕ et Δi/Δt, ΔM caractérisant une variation du couple, Δi une variation du courant du moteur d'entraînement (2), Δϕ une variation correspondante de l'angle de rotation de l'outillage de montage (17) autour de l'axe (A), et Δt une variation correspondante de temps.
